# EUROPÄISCHE PATENTANMELDUNG

(11) **EP 1 229 466 A1**
(43) Veröffentlichungstag der Anmeldung: **07.08.2002**
(21) Anmeldenummer: 01102350.4
(22) Anmeldetag: 01.02.2001
(51) Int. Cl.: G06F 17/60

(54) **Verfahren, Computerprogramm und System zur ABC-Analyse**

(71) Anmelder: Michel-Institut GmbH, 96179 Rattelsdorf (DE)
(72) Erfinder: Peiffer, Stephan, Dr., 81675 München (DE)
(74) Vertreter: Blumbach, Kramer & Partner GbR

(57) **Zusammenfassung**

Es wird ein Verfahren zur automatisierten ABC-Analyse der Kostenstruktur eines Unternehmens angegeben, mit dem die Daten über die Umsätze des Unternehmens mit einer Mehrzahl von Produkten und einer Mehrzahl von Kunden, die Daten über die direkten Kosten des Unternehmens für Produkte und Kunden, und die Daten über die indirekten Kosten des Unternehmens automatisiert so verknüpft werden, daß die Produkte und Kunden in einer ABC-Matrix dargestellt werden können, die die Produkte und Kunden nach ABC-Klassifizierung mit zugeordneten Daten enthält.

## Beschreibung

Die vorliegende Erfindung bezieht sich auf ein Verfahren, ein Computerprogramm und ein System zur ABC-Analyse.

Das sogenannte ABC-Verfahren ist in der Betriebswirtschaftslehre als solches bekannt. Es wurde bisher dazu verwandt, eine Klassifizierung von Kunden nach dem mit den Kunden gemachten Umsatz oder von Produkten nach dem mit den Produkten gemachten Umsatz zu erhalten.

Damit eine solche Klassifizierung vorgenommen werden konnte, war es notwendig, die dazu benötigten Daten aus dem Datenbestand des entsprechenden Unternehmens zu erhalten oder gegebenenfalls fehlende Daten extra zu erheben.

Die Analyseergebnisse aus solchen ABC-Verfahren wurden dann als Grundlage für unternehmerische Entscheidungen verwendet.

Die vorliegende Erfindung hat die Aufgabe, diese bekannten ABC-Verfahren zu einen leistungsfähigen Analysewerkzeug weiterzuentwickeln, das automatisiert komplexe Zusammenhänge zwischen Kunden, Produkten, Umsätzen und Kosten ermitteln kann.

Diese Aufgabe wird gelöst durch ein Verfahren nach Anspruch 1, ein Computerprogramm nach Anspruch 5 bzw. ein System nach Anspruch 7.

Die Erfindung ist besonders geeignet für die ABC-Analyse für ein Unternehmen des verarbeitenden Gewerbes.

Weiterbildungen der Erfindung sind in den Unteransprüchen angegeben.

Es werden die gleichzeitige Verwendung von produktseitigen und kundenseitigen ABC-Verfahren (in einer Matrix) und die Integration von ABC-Verfahren und Prozesskostenrechnung ermöglicht.

Zum Beispiel können auf der Basis der ABC-Analyse gegebenenfalls automatisiert Vorschläge zu unternehmerischen Maßnahmen wie der Streichung bestimmter Produkte, der Preiserhöhung für bestimmte Produkte, etc., und basierend auf diesen Vorschlägen und den Daten aus der ABC-Analyse die Auswirkungen dieser Maßnahmen durch automatisierte Neuberechnung wiederum automatisch ausgegeben werden.

Die Erfindung ermöglicht also einerseits ein komplexe Analyse betriebswirtschaftlicher Daten in automatisierter Form vorzunehmen, was bereits ein erheblicher Fortschritt gegenüber den bekannten ABC-Verfahren ist, sie ermöglicht aber weiter eine automatische Erzeugung von Vorschlägen für unternehmerische Maßnahmen ohne Zwischenschaltung menschlicher Verstandestätigkeit und die automatische Simulation der voraussichtlichen Auswirkungen dieser vorgeschlagenen Maßnahmen, wiederum ohne Zwischenschaltung menschlicher Verstandestätigkeit.

Weitere Merkmale, Vorteile und Zweckmäßigkeiten ergeben sich aus der Beschreibung von Ausführungsbeispielen anhand der Figuren. Von den Figuren zeigen:
- Fig. 1: eine Darstellung einer sogenannten ABC-Brutto-Matrix und
- Fig. 2: ein Beispiel einer Darstellung einer verdichteten Liste.

Die Erfindung wird zunächst unter Bezugnahme auf eine erste Ausführungsform, die eine ABC-Analyse für ein Unternehmen des verarbeitenden Gewerbes betrifft, beschrieben.

### Phase 1: "Ermittlung der notwendigen Daten und Definieren der Datenbank"

Für die automatisierte ABC-Analyse entsprechend den Ausführungsformen der Erfindung werden bestimmte Daten benötigt. Dieses sind die Basisdaten, die Kostentreiberdaten und die Prozeßkostendaten.

Die sogenannten Basisdaten sind bei einem Unternehmen des verarbeitenden Gewerbes Daten wie Umsatz, Stückzahl, variable Kosten (ausschließlich produktbezogene Kosten, keine Gemeinkosten, das heißt normalerweise z.B. bei einem Unternehmen des verarbeitenden Gewerbes Löhne und Materialkosten), Deckungsbeitrag 1 (= Umsatz - variable Kosten = DB1) je Kunde (mit Kundenname, Kundennummer, Länderkennzeichen) und je Produkt (mit Produkttyp, Artikelnummer, Produktgruppe und sonstigen Klassifizierungsmerkmalen des Produktes) für einen definierten Zeitraum (z.B. Geschäftsjahr). Diese Basisdaten liegen gewöhnlich bei einem Unternehmen ohnehin in dem unternehmensinternen EDV-System vor oder lassen sich einfach aus vorhandenen Daten gewinnen. Andernfalls müssen diese Basisdaten für die ABC-Analyse erhoben werden. Die Ermittlung der Basisdaten, egal auf welchem Weg, wird als Schritt 11 bezeichnet.

Die Kostentreiberdaten sind die Daten zu den wesentlichen Kostentreibern, d.h. den wesentlichen Verursachern von Kosten. Die wesentlichen Kostentreiber müssen ausgewählt werden. Diese Auswahl hängt natürlich von der Art des Unternehmens ab. Bei einem Unternehmen des verarbeitenden Gewerbes sind diese wesentlichen Kostentreiber z.B. die Anzahl der Aufträge, die Anzahl der Auftragspositionen, die Anzahl der Bestellungen, die Anzahl der Auslieferungen, die Anzahl der Ein- und Auslagerungen, die Anzahl der Fertigungsaufträge, die Anzahl und/oder die Art der Reklamationen, die Ausschußraten, die Rechnungen, die Herstellverfahren, der Produktionsstandort (z.B. kann das selbe Produkt an unterschiedlichen Produktionsstandorten unterschiedliche Kosten oder Qualitätsmängel verursachen), etc.. Die Auswahl erfolgt nach betriebswirtschaftlichen Kriterien, die den Fachleuten für die entsprechenden Unternehmenstypen ohne weiteres geläufig sind. Die Daten zu diesen wesentlichen Kostentreibern (im folgenden Kostentreiberdaten genannt) werden ebenfalls je Produkt und je Kunde für den selben Zeitraum wie die Basisdaten benötigt. Die Kostentreiberdaten bestehen einerseits aus Zahlen, wie der Anzahl der Aufträge, und andererseits aus Verknüpfungsinformation, wie der Zuordnung einer bestimmten Anzahl von Aufträgen zu einem bestimmten Produkt. Die Kostentreiberdaten liegen gewöhnlich bei einem Unternehmen im wesentlichen ebenfalls ohnehin in dem unternehmensinternen EDV-System vor, soweit es die Zahlenwerte betrifft, oder sie lassen sich einfach aus vorhandenen Daten gewinnen. Andernfalls müssen diese Kostentreiberdaten für die ABC-Analyse erhoben werden. Sie müssen dann noch mit der Verknüpfungsinformation versehen werden. Die Ermittlung der Kostentreiberdaten, egal auf welchem Weg, wird als Schritt 12 bezeichnet.

Außerdem werden Daten zu den sogenannten Prozeßkosten benötigt. Ein Prozeß ist der Ablauf eines bestimmten Vorgangs im Unternehmen. In der Betriebswirtschaftslehre ist die sogenannte Prozeßkostenrechnung bekannt, bei der unter anderem ermittelt wird, welche indirekten Kosten verursachungsgerecht auf die Kunden bzw. Produkte anzurechnen sind. Die so ermittelten Prozeßkosten werden dann entsprechend auf die jeweiligen Kostenstellen angerechnet.

Zur Vorbereitung der Prozeßkostenrechnung ist zunächst je Kostenstelle zu ermitteln, welche indirekten Kostenarten nach den Kriterien der Prozeßkostenrechnung verursachungsgerecht auf die Produkte bzw. Kunden zu verrechnen sind. Dabei ist z.B. zu prüfen, welche Kostenarten noch nicht in die direkten Herstellkosten (Material, direkte Löhne) zur Ermittlung des DB1 eingeflossen sind. Für die Kostenstellen werden dazu z.B. Datenblätter erstellt, die insbesondere die zu verrechnenden Kosten aber auch Basisinformationen zur Kostenstelle (z.B. Anzahl Mitarbeiter, Namen der Mitarbeiter, grobe Beschreibung der Aufgaben, Leiter, etc.) enthalten. Nach der Ermittlung und Summierung dieser indirekten Kosten wird ein Plausibilitätsabgleich mit den in der Ergebnisrechnung des Unternehmens vorhandenen Daten vorgenommen. Die Daten über Kostenentstehung in einzelnen Schritten eines Prozesses und die Zuordnung zu einem Produkt/Kunden werden gegebenenfalls an die ABC-Analyse angepaßt.

Die Grundlagen für die tatsächliche Zuordnung der Kosten müssen gegebenenfalls in Interviews oder mit anderen Instrumenten der Unternehmensanalyse und -beratung ermittelt werden. In solchen Interviews werden beispielsweise die folgenden Teilschritte vorgenommen:
Im ersten Teilschritt wird mit den Mitarbeitern der Kostenstellen zunächst deren Aufgabenstruktur (Mitarbeiter X hat die Aufgaben 1, 2, 3,...) besprochen und die Ergebnisse werden direkt in ein entsprechend EDV-gerecht vorbereitetes Datenblatt der Kostenstelle übertragen. Dabei wird auch eine hierarchische Unterteilung und Kennzeichnung in Prozesse,
Hauptaufgaben und Teilaufgaben vorgenommen. EDV-gerecht bedeutet, daß die Eintragungen direkt oder durch eine vorgegebene Umrechnung, die automatisiert erfolgt, in die vorgegebene Datenstruktur der Datenbank, die später erläutert wird, übernommen werden können.
Im zweiten Teilschritt der Interviews erfolgt die Abschätzung/Ermittlung der Zeitanteile je Aufgabenbereich durch die Mitarbeiter. Die EDV-gerecht vorbereiteten Datenblätter sind so aufgebaut, daß sich über die Zeitanteile automatisch die Kosten berechnen, die anteilig dieser Aufgabe zuzurechnen sind.
Im dritten Teilschritt werden die Kostentreiber je Aufgabe ermittelt. Es wird z.B. erfragt, daß die Anzahl der Auftragspositionen der wesentliche Aufwands- bzw. Kostentreiber für die Export-Auftragsabwicklung innerhalb der Kostenstelle ist.
Im letzten Teilschritt erfolgt die Indexierung für die verursachungsgerechte Kostenverrechnung: Hier wird z.B. im Gespräch ermittelt, welche Auftragspositionen besonders viel Zeit in Anspruch nehmen. Über eine Indexierung bzw. Äquivalenzziffernbildung wird z.B. berücksichtigt, daß die Bearbeitung von Aufträgen bestimmter Kunden in bestimmten Regionen besonders aufwendig ist (z.B. weil für Osteuropäische Länder bestimmte Papiere, Nachweise, behördliche Genehmigungen o.ä. erforderlich sind). In solchen Fällen wird dann z.B. abgeschätzt und hinterlegt, daß ein bestimmter Auftrag für die Ukraine viermal soviel Zeit erfordert, wie der gleiche Auftrag innerhalb der EU nach Belgien.

Die auf diese oder andere Weise erhaltenen Daten ergeben die sogenannten Prozeßkostendaten. Die Ermittlung der Prozeßkostendaten, egal auf welchem Weg, wird als Schritt 13 bezeichnet.

Die Datenbank, die bei der ersten Ausführungsform der automatisierten ABC-Analyse benutzt wird, hat folgende grundsätzliche Struktur. Die Datenbank enthält Datensätze für Produkte und für Kunden. Die Datensätze für die Kunden enthalten jeweils z.B. Datenfelder für
den Namen,
die Kundennummer ( als Anlieferstelle),
die Konzernnummer,
das Länderkennzeichen,
die ABC-Klassifizierung,
den Kundentyp / Vertriebsweg,
den Absatz (Stückzahl) je Produkt
die Anzahl der Lieferpositionen ( jeweils Einzelstück / Ganzpalette )
die Anzahl der Aufträge
die Anzahl der Rechnungen
die Anzahl der Auftrags-/Bestellpositionen
   etc., und
Verknüpfungen mit anderen Datenfeldern.

Beispielsweise enthält der Datensatz für den vierten Kunden die Datenfelder 30000-39999. Dabei enthalten
das Datenfeld 30000 den Namen,
das Datenfeld 30001 die Kundennummer ( als Anlieferstelle ),
das Datenfeld 30002 die Konzernnummer,
das Datenfeld 30003 das Länderkennzeichen,
die Datenfelder 30004 - 30010 den Kundentyp / Vertriebsweg,
das Datenfeld 30011 den Absatz (Stückzahl) des Produkts
das Datenfeld 30012 die Anzahl der Aufträge
das Datenfeld 30013 die Anzahl der Rechnungen
das Datenfeld 30014 die ABC-Klassifizierung,
die Datenfelder 30015 - 30016 die Anzahl der Lieferpositionen (jeweils Einzelstück / Ganzpalette)
die Datenfelder 30017 - 30018 die Anzahl der Auftrags-/Bestellpositionen
die Datenfelder 30019 - 30999 Freifelder für weitere Einträge
   etc., und
die Datenfelder 31000 - 39999 Verknüpfungsfelder für Verknüpfungen der Datenfeldern (z.B. je 9 Verknüpfungsfelder für jedes Feld, d.h. 31000-31008 für Datenfeld 30000, also den Namen, 31009-31017 für Feld 30001, also die Kundennummer, etc).

Die Datensätze für die Produkte enthalten jeweils z.B. Datenfelder für
die Artikelnummer,
das Modell,
die Farbe,
die Ausführung, etc.
die Herkunft (Fertigungsstätte),
das Fertigungsverfahren, etc.
die zugelieferten Teile,
das Produzentenkennzeichen des Zulieferers
den Standort des Zulieferers
den Nettoumsatz Januar bis Dezember (z.B. bereits korrigiert um Jahresboni und Gutschriften auf Artikelebene oder gesonderte Datenfelder für diese), die Qualitätskennzahlen,
die Ausschußquoten,
die Reklamationen,
die Materialkosten, z.B. unterteilt in Datenfelder für Material, Materialgemeinkosten,
den direkten Fertigungslohn je Kostenstelle,
den direkten Fertigungslohn je Artikel
die produzierte Menge (Stückzahl),
den Absatz (Stückzahl),
die Anzahl der Fertigungsaufträge
die Anzahl der Ein- und Auslagerungen
die Anzahl der Lieferpositionen ( jeweils Einzelstück / Ganzpalette )
die Anzahl der Aufträge
die Anzahl der Rechnungen
die Anzahl der Auftrags-/Bestellpositionen
   etc., und
   Verknüpfungen mit anderen Datenfeldern.

Sind z.B. 300 Kundendatensätze vorgesehen, dann enthält der Datensatz für das 416-te Produkt die Datenfelder 7150000-7159999. Dabei sind die Inhalte der Datenfelder in analoger Weise wie oben bei dem Kundendatensatz vergeben bzw. definiert.

Die Datenbank enthält weiter Datensätze für Prozeßkostendaten.
Die Datensätze für die Prozeßkostendaten enthalten jeweils z.B. Datenfelder je Kostenstelle für
die indirekten Kostenarten (die nach den Kriterien der Prozeßkostenrechnung noch nicht in die direkten Herstellkosten wie Material, direkte Löhne, etc. zur Ermittlung des DB1 eingeflossen sind), also z.B. die Löhne, die Materialkosten, die Reisekosten, etc. der Kostenstelle, also z.B. des Vorstands, der Verwaltung, des Marketing, etc.,
die Anzahl der Mitarbeiter,
die Namen oder eine andere Identifizierung der Mitarbeiter,
die Aufgaben (also z.B. Exportabwicklung für das Produkt C in das Land Y, Reisekostenabrechnung Marketing und Finanzen und Controlling, etc.),
die Verknüpfung der Aufgaben mit den Mitarbeitern, dem Leiter, etc. (also z.B. Mitarbeiter X hat die Aufgaben 1, 2, 3,...),
   den Zeitanteil je Aufgabe je Mitarbeiter,
   Anteil einer Aufgabe je Kostenart, also z.B. den Anteil der Reisekosten für Marketing in der Ukraine an den Gesamtreisekosten der Kostenstelle Marketing,
   Indexierung von Aufgaben eines Aufgabenbereichs (durch die Indexierung können der Zeitaufwand oder der Materialverbrauch oder andere kostenrelevante Faktoren verschiedener Aufgaben eines Aufgabenbereiches wie der Export in die Ukraine oder nach Belgien aus dem Beispiel angegeben werden) oder von Aufgabenbereichen der Kostenstelle untereinander, also z.B. bei der Kostenstelle Vorstandsressort Finanzen und Controlling können die Aufgabenbereiche Finanzen und Controlling im Vergleich zueinander indexiert werden, was den Zeitaufwand des entsprechenden Vorstands angeht,
   etc., und
   Verknüpfungen mit anderen Datenfeldern.

Die Datenbankstruktur enthält weiter Datensätze für die Produkt-Kunden-Kombinationen mit entsprechenden Datenfeldern.

Die oben angegebene Datenbankstruktur ist ein Bespiel, das bei der ersten Ausführungsform benutzt wird. Natürlich sind andere Datenbankstrukturen, die die Eingabe und Verknüpfung der Basisdaten, der Kostentreiberdaten und der Prozeßkostendaten ermöglichen, genauso denkbar.

Die Datenbankstruktur liegt für jede ABC-Analyse grundsätzlich vor, und es ist lediglich notwendig, den Datenfeldern eine bestimmte Bedeutung zuzuweisen, also z.B. dem Datenfeld 1587150 aus den Datenfeldern für die Prozeßkosten die Bedeutung "Reisekosten Marketing Ukraine" zuzuweisen und in den Verknüpfungsfelder 1585068 und 1585069 die Verknüpfung zu den Gemeinkosten für Produkte, die in die Ukraine geliefert werden, bzw. zu den Gemeinkosten für Kunden aus der Ukraine zu definieren, also z.B. zu den Datenfeldern 18905623 und 18904563, jeweils gegebenenfalls noch mit einer Umrechnung oder ähnlichem.

Die obige Datenbankstruktur hat den Vorteil, daß sie es erlaubt, große Teile der Verknüpfungen, die in jedem Unternehmen gleich sind, vorzudefinieren. Dann ist es bei der Analyse eines Unternehmens nicht mehr notwendig, alle Felder zu definieren, sondern nur noch diejenigen, die Spezialitäten des Unternehmens enthalten.

Die Verknüpfungsfelder haben eine wichtige Funktion in der Datenbankstruktur, den sie erlauben eine Rückwärtsverfolgung von Kosten und die automatisierte Vorhersage von Ergebnissen bestimmter unternehmerischer Entscheidungen, wie der Streichung des Produkts 5 aus dem Sortiment und den daraus resultierenden Wirkungen, wie später erläutert wird. Diese Rückwärtsverfolgung kann grundsätzlich auch anders realisiert werden, aber die Verknüpfungsfelder sind eine verhältnismäßig einfache Implementierung.

Da die Datenbankstruktur grundsätzlich vorliegt, ist es nicht notwendig, daß am Anfang einer ABC-Analyse eines Unternehmens bereits alle Daten bekannt sind. Es ist z.B. insbesondere möglich, daß die Prozeßkostendaten noch gar nicht vorliegen und damit auch noch nicht die entsprechende Bedeutung einzelner Datenfelder für die Prozeßkosten. Die Basisdaten und die Kostentreiberdaten können aber trotzdem schon in die Datenbank eingegeben werden. Sollte sich während der ABC-Analyse herausstellen, daß weitere oder andere Datenfelder für die Basisdaten oder die Kostentreiberdaten oder die Prozeßkostendaten erforderlich sind, so kann diese Anforderung in einfacher Weise durch Definition der Bedeutung der bereits vorhandenen aber noch nicht vergebenen Datenfelder und Verknüpfungsfelder erfüllt werden.

Die obige Datenbankstruktur selbst macht also bereits eine hohe Flexibilität der ABC-Analyse möglich.

Die Definition der Datenbankstruktur, egal in welcher Form, wird als Schritt 14 bezeichnet. Bezüglich Schritt 14 ist zu beachten, daß die Datenbankstruktur lediglich genügend Kapazität für die zu erwartende Datenmenge und für die zu erwartende Verknüpfungsmenge aufweisen muß.

Für die Erläuterung der ersten Ausführungsform der automatisierten ABC-Analyse wird nun davon ausgegangen, daß die Basisdaten, die Kostentreiberdaten und die Prozeßkostendaten sowie die Datenbankstruktur vor Beginn der ABC-Analyse vorliegen. Anders gesagt, die Schritte 11 bis 14, die die Phase 1 bilden, wurden vollständig ausgeführt. Alternative Fälle werden später erläutert.

Mit den Basisdaten und den Kostentreiberdaten und den Prozeßkostendaten kann die ABC-Analyse nun begonnen bzw. durchgeführt werden. Es werden zunächst in einer zweiten Phase der ABC-Analyse die sogenannten "ABC-Brutto-Matrizen ermittelt.

### Phase 2: "Ermittlung der ABC-Bruttomatrizen"

In der Phase 2 werden die folgenden methodischen Teilschritte ausgeführt.

Zunächst werden in Schritt 21 die Basisdaten in der Datenbank gespeichert.

Dann werden in Schritt 22 die Kostentreiberdaten zu den Datensätzen, die nach Schritt 21 in der Datenbank vorhanden sind, zugespielt, d.h. gespeichert und mit den vorhandenen Datensätzen verknüpft. Die sogenannten Kostentreiberdaten werden in Schritt 22 automatisch mit den Datensätzen der Basisdaten, die in Schritt 21 gespeichert wurden, verknüpft. Die Verknüpfung erfolgt durch Definieren der Verknüpfungen in der Datenbank durch Speichern entsprechender Werte in den Verknüpfungsfeldern. Es ist dabei zu beachten, daß die Zuordnung zu einem bestimmten Produkt/Kunden in den Kostentreiberdaten bekannt bzw. enthalten ist, und daß der richtige Wert/Code, der daraus resultiert, in ein Verknüpfungsfeld geschrieben werden muß. Diese Verknüpfung bildet die Basis für die spätere Zuordnung der indirekten Kosten (Gemeinkosten) zu den Produkt-Kunde-Kombinationen in Phase 3. (Genauer gesagt ermöglichen die Ermittelung und Verknüpfung z.B. die spätere Beantwortung der Frage, welchen Anteil ein Produkt und/oder ein Kunde an den durch Fertigungsaufträge ausgelösten Arbeiten und Kosten im Betrieb hatte).

In Schritt 23 wird aus den Daten der Datenbank eine ABC-Klassifikation je Kunde sowie je Produkt berechnet. Natürlich ist es gegebenenfalls auch möglich, falls es zweckmäßig ist, bestimmte Kunden oder Produkte zu Gruppen zusammenzufassen. Eine ABC-Klassifikation ist eine absteigende Umsatzrangliste, bei der Kunde bzw. das Produkt mit dem meisten Umsatz an erster Stelle liegt und dann die Kunden/Produkte in der Reihenfolge ihres entsprechenden Umsatzes in der Rangliste angeordnet werden. Automatisiert wird sofort der kumulierte Umsatz innerhalb der Umsatzrangliste berechnet. Die ABC-Klassifizierung je Kunde sowie je Produkt ergibt sich so, dass alle Kunden bzw. Produkte, die innerhalb der Rangliste des kumulierten Umsatzes bis zu A% des Umsatzes ausmachen, das Kennzeichen A-Produkt bzw. A-Kunde erhalten. Alle Kunden bzw. Produkte, die zwischen dieser A%-Grenze und der B%-Grenze der Umsatzrangliste (kumulativ) liegen, erhalten das Kennzeichen "B". Die Produkte bzw. Kunden, die oberhalb der B%-Grenze liegen, d.h. die innerhalb der letzten C% Umsatzanteile liegen, werden als C-Produkte/Kunden klassifiziert. Typische Werte für A und B sind 80 und 95. Beispielsweise tragen das erste Produkt der Umsatzrangliste 40%, das zweite Produkt der Umsatzrangliste 25% (kumulierter Umsatz 65%), das dritte Produkt der Umsatzrangliste 15% (kumulierter Umsatz 80%), das vierte Produkt der Umsatzrangliste 9% (kumulierter Umsatz 89%), das fünfte Produkt der Umsatzrangliste 6%(kumulierter Umsatz 95%) und das sechste bis zehnte Produkt der Umsatzrangliste zusammen 5% zum Gesamtumsatz des Unternehmens bei. Dann werden das erste bis dritte Produkt jeweils als A-Produkt (in den ersten 80% kumulierter Umsatz), das vierte und fünfte Produkt jeweils als B-Produkt (in den 15% zwischen 80% und 95% des kumulierten Umsatzes) und das sechste bis zehnte Produkt jeweils als C-Produkt (in den letzten 5% des kumulierten Umsatzes) klassifiziert. Wenn ein Produkt die Grenze überlappt wird es bei dieser Ausführungsform der höheren Klasse zugeschlagen. Diese Regel läßt sich aber auch umkehren.

In Schritt 24 wird die entsprechende Klassifizierung als A, B oder C in der Datenbank in den entsprechenden Datensätzen der Kunden/Produkte gespeichert.

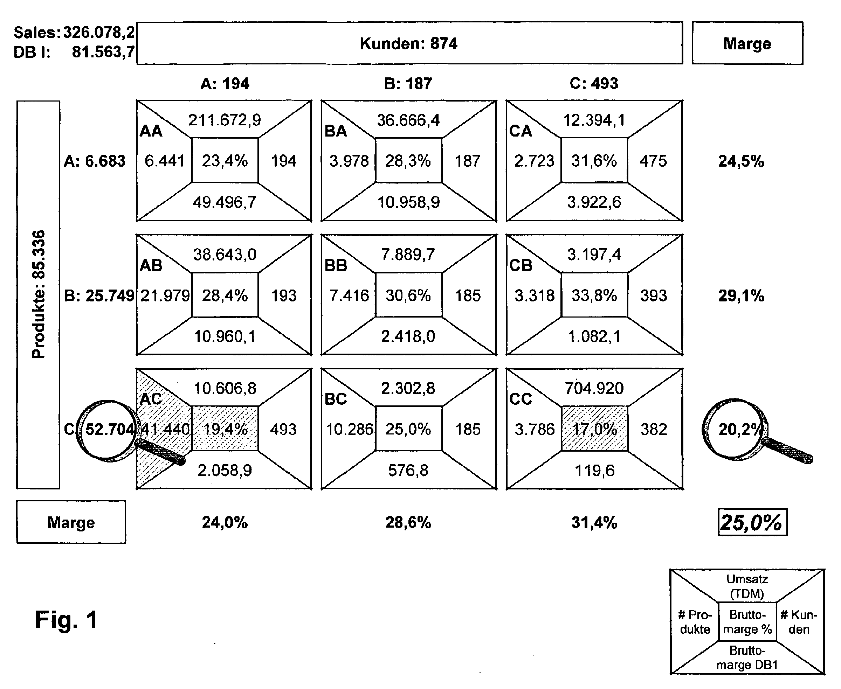

In Schritt 25 wird das zentrale Analyseinstrument, die sogenannten "ABC-Matrizen", aus den in der Datenbank automatisch erzeugten Datensätzen berechnet. In Schritt 25 werden sogenannte ABC-Brutto-Matrizen (Brutto wegen der Basierung auf DB1 =Bruttomarge) berechnet. Dieses geschieht so, daß die Produktklassen und die Kundenklassen in einer 3x3-Matrix angeordnet werden. Jedes der Matrixelemente (z.B. C-Kunden an die A-Produkte verkauft wurden) wird "mit Informationen verdichtet", d.h. ausgewählte Daten wie z.B. Umsatz, DB1, variable Kosten, Anzahl der Produkte, Anzahl der Kunden, etc. und/oder die Kostentreiberdaten, werden dem entsprechenden Matrixelement zugeordnet. Die Auswahl der Daten erfolgt abhängig von dem zu analysierenden Unternehmen. In einer bevorzugten Ausführungsform werden der Umsatz, die Bruttomarge (DB1), die Zahl der Produkte (also beim Matrixelement für C-Kunden und A-Produkte die Zahl der A-Produkte, die an die C-Kunden verkauft wurde) und die Zahl der Kunden (also beim Matrixelement für C-Kunden und A-Produkte die Zahl der C-Kunden, an die A-Produkte verkauft wurden) um die Bruttomarge als ein Matrixelement berechnet. Ein Beispiel einer ABC-Brutto-Matrix ist in Fig. 1 gezeigt.

Die Schritte 21 bis 25 bilden die zweite Phase der ABC-Analyse, die mit der Erzeugung der ABC-Matrizen endet. Folgende Besonderheiten sind in dieser Phase 2 hervorzuheben:
* Verknüpfung von spezifischen Daten zu Kostentreibern mit Produkten/Kunden.
* Automatisierte Berechnung und Zuordnung der ABC-Klassen.
* Automatisierte Berechnung der Matrizen bzw. darin enthaltenen Daten unter Verwendung von Produkt- und Kundenklassifizierung nach ABC-Kriterien, die in ABC-Produkt-Kunde-Kombinationen resultiert.

Nun werden in Phase 3 die Prozeßkosten verrechnet und die ABC-Netto-Matrizen werden ermittelt.

### Phase 3 "Prozeßkostenverrechnung und Ermittlung der ABC-Netto-Matrizen":

In der Phase 3 werden die folgenden methodischen Teilschritte ausgeführt.

In Schritt 31 werden die Prozeßkosten den Produkt-Kunden-Kombinationen zugeordnet. Das bedeutet konkret, daß die Prozeßkostendaten in der Datenbank mit den entsprechenden einzelnen Datensätzen durch entsprechende Einträge in den Verknüpfungsfeldern verknüpft werden. Das geschieht so, daß die in der Prozeßkostenrechnung ermittelten Kosten der entsprechenden Produkt-Kunden-Kombination zugeordnet werden. In dem Beispiel aus dem letzten Teilschritt des Interviews bedeutet das, daß die z.B. hinter der Teilaufgabe "Erfassung Export-Aufträge" (Prozeß "Kaufmännische Auftragsabwicklung", Haupt-Aufgabe "Auftragserfassung") liegenden Kosten verursachungsgerecht auf die einzelnen Produkt-Kunden-Kombinationen verteilt, daß also z.B. die Produkt-Kunden-Kombination mit dem Kunden aus der Ukraine höhere Prozeßkosten zugeordnet bekommt als die Produkt-Kunden-Kombination mit dem Kunden aus Belgien. Die Verwirklichung geschieht dadurch, daß die Auftragsabwicklung Ukraine einen höheren Index als die Auftragsabwicklung Belgien in den Prozeßkostendaten erhalten hat, und daß als Folge automatisch ein der Indexierung entsprechender höherer Anteil der Auftragsabwicklungskosten der entsprechenden Produkt-Kunden-Kombination, bei der daß Produkt in die Ukraine geliefert wird, zugeordnet wird. Dazu bedarf es keinerlei menschlichen Eingriffs.

An dieser Stelle ist zu beachten, daß diese Zuordnung automatisch erfolgt. Die Datenstruktur der Datenbank enthält entsprechende Datenfelder für die entsprechenden Prozeßkosten, die jetzt automatisch den entsprechenden Datenfeldern zugeordnet werden.

In Schritt 32 wird das zentrale Analyseinstrument, die "ABC-Matrix", erneut berechnet. In Schritt 32 werden sogenannte ABC-Netto-Matrizen berechnet. In diesem Zusammenhang ergibt sich die Bedeutung von Netto wie folgt. Der Deckungsbeitrag 1 (DB1) ist die Brutto-Marge. Der Deckungsbeitrag 2 ergibt aus dem Deckungsbeitrag 1 abzüglich der Fertigungsgemeinkosten und Logistikkosten, also z.B. Meistergehälter etc, also von allen indirekt in der Fertigung Tätigen wie Meister, Lohnabrechnung, Lagerverwaltung, Instandhaltung, etc. Das heißt, DB2 = DB1 - (Fertigungsgemeinkosten und Logistikkosten). Die Netto-Marge ergibt sich aus dem Deckungsbeitrag 2 abzüglich der Vertriebs- und Verwaltungskosten und ist das Nettobetriebsergebnis oder der Deckungsbeitrag 3 (DB3). Das heißt, DB3 = DB2 - (Vertriebs- und Verwaltungskosten). Daraus ergibt sich, dass der Umsatz abzüglich DB3 gleich den Vollkosten ist. Die Bezeichnung des Nettobetriebsergebnisses mit DB3 ist nicht allgemeingültig, da die entsprechende Verwendung des Begriffs von Unternehmen zu Untemehmen unterschiedlich ist.

Die ABC-Netto-Matrizen enthalten also die Anordnung der Produktklassen und der Kundenklassen in der 3x3-Matrix, wobei jedes dieser Matrixfelder (z.B. C-Kunden an die A-Produkte verkauft wurden) wieder mit spezifischen Informationen verdichtet wird, wie z.B. der durchschnittlichen Bestelllosgröße, den durchschnittlichen Marketingkosten, den durchschnittlichen Fertigungsgemeinkosten, etc. Diese Verdichtung ist frei wählbar.

Die Schritte 31 und 32 bilden die dritte Phase der ABC-Analyse. Folgende Besonderheiten sind in dieser Phase 3 hervorzuheben:
* Automatische Verrechnung der Prozeßkosten nach Kostentreibern mit entsprechender Indexierung.
* Vollständig transparente und zurückverfolgbare Kostenverrechnung, d.h. die auf einzelne Produkte verrechneten Kosten lassen sich im Hinblick auf die Herkunftsquellen jederzeit nachvollziehen. So kann automatisiert transparent gemacht werden, welche Kostenarten von welcher Kostenstelle auf ein bestimmtes Produkt bzw. Kunden verrechnet worden sind und umgekehrt auf welches Produkt die Kosten einer Kostenstelle verrechnet worden sind.
* Erneute automatisierte Berechnung der Matrizen bzw. darin enthaltenen Daten unter Verwendung von Produkt- und Kundenklassifizierung nach ABC-Kriterien, die in ABC-Produkt-Kunde-Kombinationen resultiert (hier insbesondere die Verdichtung der Nettomargen in den Matrixfeldern).

Nun werden in Phase 4 Maßnahmen festgelegt und die Umsetzung der Maßnahmen überwacht.

### Phase 4 "Maßnahmenfestlegung und Überwachung der Maßnahmenumsetzung":

In der Phase 4 werden die folgenden methodischen Teilschritte ausgeführt.

In Schritt 41 können Darstellungen für die Durchführung von Komplexitätsanalysen erzeugt werden. Der Datenbankaufbau erlaubt eine sogenannte retrograde Datenauflösung, d.h., die Daten können bis zu ihrem Ursprung zurückverfolgt werden. Wie oben beschrieben wurde, ist die Datenbank so aufgebaut, dass eine Auswertungsmöglichkeit nach allen Kostentreibern und Produkt- bzw. Kundenklassifizierungen möglich ist.

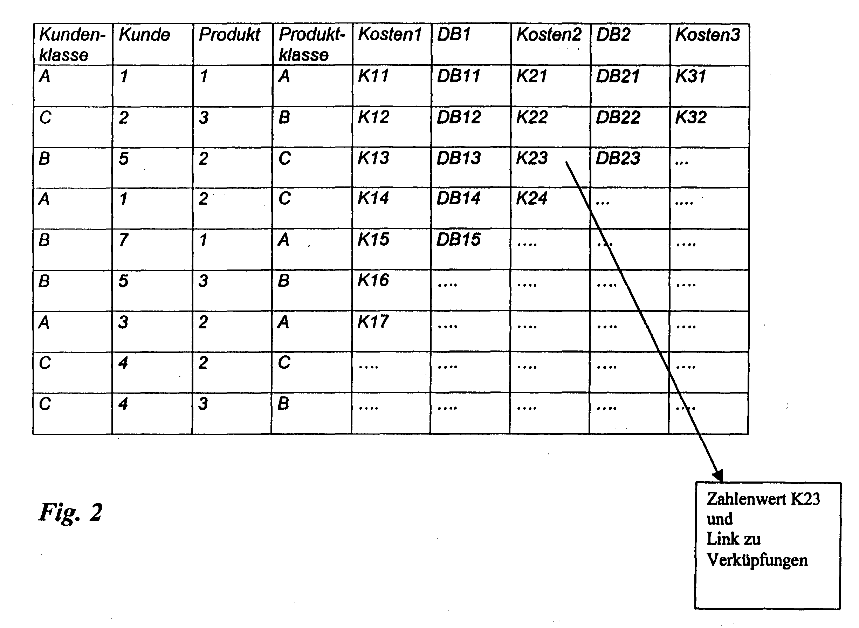

In Schritt 41 werden verdichtete Listen nach verschiedenen Auswertungsdimensionen erstellt. Ein Beispiel der Darstellung einer solchen verdichteten Liste ist in Fig. 2 gezeigt. So können in diesem Schritt Darstellungen erzeugt werden, die einzelne Kundengruppen und/oder Produktgruppen mit ausgewählten Merkmalen wie den Deckungsbeiträgen, Bestelllosgrößen, Materialaufwand, Fertigungskosten, etc. zeigen. Die Darstellungen zeigen dann ohne weiteres Kundengruppen mit klar unterdurchschnittlichen Bestelllosgrößen, oder dass eine bestimmte Fertigungstechnologie auch unter Berücksichtigung von Prozesskosten die profitabelste Herstellung bestimmter Produkte erlaubt.

Eine bestimmte Anzahl von Darstellungen wird nach entsprechender Vorauswahl automatisch erzeugt. Das können z.B. Darstellungen der 20 Produkt-Kunde-Kombinationen mit den schlechtesten Netto-Margen, die 20 Produkt-Kunde-Kombinationen mit den kleinsten Bestelllosgrößen, 20 Produkt-Kunde-Kombinationen mit den höchsten Marketingkosten, 20 Produkt-Kunde-Kombinationen mit dem höchsten Auftragsbearbeitungskostenanteil, etc. sein, wobei die Darstellung dann zusätzlich die relevanten Daten enthält. Bei Darstellung auf einem Bildschirm oder mittels Projektor in einem Workshop können dann z.B. durch Klicken auf die entsprechenden Daten die zugrundeliegenden Zahlen und Daten aufgerufen werden.

Diese Darstellungen können dann im Rahmen von Workshops mit Geschäftsführung, Vertriebs- und Fertigungsvertretern zusammen mit verdichteten EDV-Listen dazu herangezogen, konkrete Maßnahmen für einzelne Produkt- bzw. Kundenbereiche, gegebenenfalls mit Priorität gestaffelt nach Handlungsbedarf (ABC), zu definieren. Diese Darstellungen und Listen können die Maßnahmenfestlegung erleichtern, da die Ursachen für hohe Kosten, niedrige Margen o.ä. direkt erkennbar sind. So können Produktstreichungen oder andere Maßnahmen z.B. anhand einzelner Produktmerkmale wie Farbe, Ausführung o.ä. vorgenommen werden, wenn die Informationen aus der Datenbank (z.B. Stückzahlen, Umsätze und Ergebnisse je Farbtyp) entsprechend dargestellt sind.

In den genannten Workshops können die Maßnahmen konkret festgelegt werden. Das Spektrum der möglichen Maßnahmen erstreckt sich von direkten Sortimentsstreichungen über Zukaufentscheidungen bis zu Preiserhöhungen und Verfahrensänderungen.

In Schritt 42 werden die Kosteneffekte der Maßnahmen berechnet. Eine Sortimentsstreichung und Komplexitätssenkung hat nur dann einen erheblichen Ergebniseffekt, wenn auch die an den gestrichenen Produkten hängenden Kapazitäten bzw. Kosten abgebaut werden. Der Datenbankaufbau ermöglicht nun das automatische Zurückrechnen der Maßnahmen in Veränderungen der Umsätze und Kosten. Zunächst werden die Maßnahmen so definiert, dass für jede Produkt-Kunden-Kombination feststeht, welche Maßnahmen festgelegt wurden. Beispielsweise wird das Produkt 47 aus dem Sortiment gestrichen. Für die gestrichenen Produkte erfolgt danach eine automatische Rückrechnung der Kostenabbauvorgaben für die entsprechenden Kostenstellen, was aufgrund der Verknüpfungsfelder automatisch möglich ist. Beispielsweise hatte das Produkt 47 23% der Marketingkosten, wovon ein Anteil von 33% Reisekosten waren, und 11% der Kosten für die Auftragsbearbeitung verursacht. Oder bei Weiterführung des Beispieles mit dem Export in die Ukraine oder nach Belgien, die Kostenstelle "Export-Auftragsbearbeitung" erhält eine bestimmte Kostensenkungsvorgabe, weil aufgrund der Produktstreichungen sich die Anzahl der zu bearbeitenden Auftragspositionen (Kapazitätsaufwand) um ein Drittel reduziert hat. Im Ergebnis sind klare Zielvorgaben für den resultierenden Kostenabbau automatisch nach Eingabe der entsprechenden Maßnahmen ableitbar. Wichtig ist dabei zu bemerken, dass lediglich die Maßnahme "Streichen von Produkt 47" eingegeben wurde, und dass als Ergebnis die Kosteneinsparungen der einzelnen Kostenstellen automatisch ausgegeben werden.

In Schritt 43 werden die Effekte von Preisveränderungen simuliert. Beispielsweise ist für das Produkt 53 beschlossen worden, daß der Verkaufspreis um 20% erhöht wird. Die ABC-Analyse und das daraus resultierende Komplexitätsmanagement heben insbesondere auch auf eine stärkere Preisdifferenzierung ab. So sollten für C-Produkte, die aufgrund der kleinen Abnahmemengen häufig deutlich schlechtere Margen aufweisen als A-Produkte, die in großen Stückzahlen produziert werden können, auch entsprechend höhere Preise verlangt werden. Dies gilt auch für alle Produktvariationen, die klar vom Standard abweichen. Um die Ergebniseffekte solcher Preiserhöhungen (sowohl Mengenrückgang durch höhere Preise als auch Umsatzsteigerung) abschätzen zu können, ist ein automatisiertes Simulationsmodell vorgesehen, daß die Auswirkungen von Preiserhöhungen oder Preissenkungen auf den Absatz und damit auf den Umsatz abschätzt. Das Simulationsmodell ist in einem Programmmodul verwirklicht. Die einzelnen Regeln der Simulation spielen hier keine Rolle. Entscheidend ist lediglich, dass das Simulationsergebnis geänderte Zahlen für die Stückzahl und den Umsatz mit einem bestimmten Produkt liefert . Dann wird mit diesen abgeschätzten Zahlen die Veränderung der Margen berechnet, wobei diese Zahlen lediglich in der Datenbank eingesetzt werden müssen und dann mit den selben Berechnungsschritten wie oben die Wirkungen berechnet werden können.

Die berechneten Wirkungen lassen sich besonders effektiv im Controlling bei der Überwachung der Maßnahmenumsetzung benutzen.

Die Schritte 41 bis 43 bilden die vierte Phase der ABC-Analyse. Folgende Besonderheiten sind in dieser Phase 4 hervorzuheben:
* Automatisierte Kennzeichnung der Maßnahmen für Produkte und Kunden und automatisierte Rückrechung der Kosteneffekte der Maßnahmen (z.B. Produktstreichungen) und Ausgabe von Kostenabbauvorgaben für die Kostenstellen.
* Automatisierte Simulation zur Abschätzung der Effekte von Preiserhöhungen für bestimmte Produkte bzw. Kunden.

Wie die Beschreibung des ersten Ausführungsbeispiels zeigt, verbindet das Verfahren der ABC-Analyse der vorliegenden Erfindung den Ansatz des sogenannten ABC-Verfahrens mit dem Vorgehen der Prozesskostenrechnung derart, daß automatisch aus den Zahlen die sogenannten ABC-Matrizen ermittelt werden können, die auf einen Blick die Zuordnung der Kosten zu den Produkt-Kunden-Kombinationen in der ABC-Klassifizierung ermöglichen.

Gerade in Unternehmen des verarbeitenden Gewerbes spielt die Komplexität der Kunden- und Produktsegmente oft die entscheidende Rolle für die Profitabilität.

Das oben beschriebene Verfahren ermöglicht es unter Verwendung der Daten, die zum allergrößten Teil in dem Unternehmen ohnehin vorliegen, in automatisierter Weise eine ABC-Analyse der Kunden- und Produktsegmente unter Einbeziehung der Prozeßkosten in automatischer Weise zu erstellen. Die ABC-Matrizen zeigen sofort, welche Produkt-Kunden-Kombinationen profitabel sind.

Am Beispiel aus Fig. 1 läßt sich dieses gut demonstrieren. Die Zahlen zeigen sofort, daß die Preisdifferenzierung auf der Produktebene negativ ist, d.h. die C-Produkte erwirtschaften einen geringeren Deckungsbeitrag 1 als die A-Produkte und die B-Produkte. Ebenfalls ist eine geringe Preisdifferenzierung auf der Kundenebene zu sehen, da die C-Kunden nur eine um 3 % höhere Marge als die B-Kunden erbringen. Die Preisdifferenzierungen sollten normalerweise so sein, daß die in ihrer Bedeutung für den Umsatz nicht so wichtigen Produkte/Kunden höhere Margen erwirtschaften. D.h. das Ziel ist normalerweise eine hohe Preisdifferenzierung auf Produkt- und auf Kundenebene.

Die Zahlen zeigen weiter sofort, daß 62 % (52.407 von 85.336) der Produkte C-Produkte sind, und daß 56 % (493 von 874) der Kunden C-Kunden sind.

Diese Zahlen zeigen bereits auf den ersten Blick, daß wahrscheinlich preispolitische Maßnahmen und Sortimentsbereinigungen zu einer deutlichen Verbesserung des Ergebnisses führen.

Wenn solche Maßnahmen dann beschlossen werden (s. Phase 4), dann können die Auswirkungen solcher Maßnahmen sofort im Vergleich der Zahlen aus den ABC-Matrizen erkannt werden.

Außerdem bieten sich durch die verdichteten Listen (s. Fig. 2) die Möglichkeit, innerhalb der kritischen Produkte, Kunden oder Produkt-Kunden-Kombinationen die Elemente in einfacher Weise herauszusuchen, die für das schlechte Ergebnis in einem bestimmten Segment verantwortlich sind. In der Darstellung aus Fig. 2 ist gut zu erkennen, daß bei dem Produkt X die Netto-Marge vor allen Dingen deswegen so schlecht ist, weil die auf das Produkt entfallenden Gemeinkosten so hoch sind. Nun kann durch die genaue Betrachtung der Gemeinkosten, die in der Datenbank voll zurückverfolgbar vorliegen, erkannt werden, daß diese hohen Gemeinkosten im wesentlichen auf dem hohen Aufwand für die Auftragsabwicklung, wenn dieses Produkt in Nicht-EU-Länder exportiert wird, beruhen.

Diese Zahlen ermöglichen es dem Entscheidungsträger dann, den Preis für einen Export in Nicht-EU-Länder entsprechend zu erhöhen, das Produkt aus dem Sortiment zu streichen oder ähnliches.

Es ist zu beachten, daß das Verfahren und das System zur ABC-Analyse nicht jeweils eine bloße Computer-gestützte Anwendung bekannter Verfahren sind, sondern daß das bekannte ABC-Verfahren und die bekannte Prozeßkostenrechnung so abgewandelt wurden, daß sie unter Nutzung eines Computersystems ein neues Analyseinstrument ergeben, das vorher so nicht verfügbar war.

Das neue Analyseinstrument erfordert die spezielle Entwicklung der einzelnen Phasen und Schritte im Hinblick auf die Computeranwendung, die erst die neuen automatisierten Berechnungs- und Vorhersageschritte ermöglicht hat. Beispielsweise macht erst die Indexierung entsprechender Prozeßkosten die automatisierte Zuordnung und das automatisierte Zurückrechnen der Auswirkungen bestimmter Maßnahmen, wie das Streichen einer bestimmten Produkt-Kunden-Kombination auf die Prozeßkosten, möglich. Das Verfahren und das System stellen also nicht die bloße Implementierung vorhandener wirtschaftlicher Vorgehensweisen in einem Computersystem dar.

## Patentansprüche

1. Verfahren zur automatisierten ABC-Analyse der Kostenstruktur eines Unternehmens, mit den Schritten:
Eingeben von Daten in eine Datenbank, wobei die Daten
a) Daten über Umsätze des Unternehmens mit einer Mehrzahl von Produkten und einer Mehrzahl von Kunden in einem vorbestimmten Zeitraum,
b) Daten über die direkten Kosten des Unternehmens, die mit den Produkten und mit den Kunden verbunden sind, und
c) Daten über die indirekten Kosten des Unternehmens, die mit den Produkten und mit den Kunden verbunden sind,
enthalten, wobei die Datenbankfelder für die Daten und Verknüpfungsfelder zum Verknüpfen von Datenfeldern enthält,
Klassifizieren der Produkte in einer Rangliste mit absteigendem Umsatzteil der Produkte derart, daß die Produkte in (m+1) Klassen mit n Grenzen klassifiziert sind, wobei die Produkte, die über der n-ten Grenze (n = 1, 2, ... , m) liegen, die n-te Klasse (A, B) bilden, und die Produkte, die unter der m-ten Grenze liegen, die (m+1)-te Klasse bilden,
Klassifizieren der Kunden in einer Rangliste mit absteigendem Umsatzteil der Kunden derart, daß die Kunden in (m+1) Klassen mit n Grenzen klassifiziert sind, wobei die Kunden, die über der n-ten Grenze (n = 1, 2, ... , m) liegen, die n-te Klasse (A, B) bilden, und die Kunden, die unter der m-ten Grenze liegen, die (m+1)-te Klasse bilden, und
Anordnen der klassifizierten Produkte und der klassifizierten Kunden in einer (m+1) x (m+1)-Matrix und
Darstellen der (m+1) x (m+1)-Matrix derart, daß die einzelnen Matrixelemente zusammen mit einer Mehrzahl von zugehörigen Daten wie dem zugehörigen Umsatz, der zugehörigen Marge, der zugehörigen Zahl von Produkten/Kunden aus der entsprechenden Klasse und ähnlichem dargestellt werden.

2. Verfahren nach Anspruch 1, bei dem die Daten über die indirekten Kosten nach den Regeln der Prozeßkostenrechnung mit den entsprechenden Produkten und/oder Kunden derart verknüpft werden, daß ein Betrag der indirekten Kosten jeder Kombination aus einem Produkt aus der Mehrzahl von Produkten und einem Kunden aus der Mehrzahl von Kunden zugeordnet wird, wobei der Betrag aus Anteilen der indirekten Kosten besteht, und diese Anteile über die Verknüpfung erfaßbar sind.

3. Verfahren nach Anspruch 2, bei dem
die Anteile des Betrages der indirekten Kosten, die einer Kombination aus einem Produkt und einem Kunden zugeordnet sind, durch Abfragen vorbestimmter Verknüpfungsdaten in den Verknüpfungsfeldern separat darstellbar sind, so daß eine Reduzierung bei den indirekten Kosten, die bei Streichung der entsprechenden Produkt-Kunde-Kombination entstehen würde, darstellbar ist.

4. Verfahren nach einem der Ansprüche 1 bis 3, bei dem
ein zusätzlicher Schritt des Ausgebens von Listen vorgesehen ist, wobei eine Liste eine vorbestimmte Auswahl aus der Mehrzahl von Produkt-Kunde-Kombinationen mit zugeordneten Datensätzen wie unterschiedlichen Deckungsbeiträgen, Kostenanteilen, etc. enthält.

5. Computerprogramm, das ein Computerprogrammcodemittel aufweist, das zum Ausführen aller Schritte des Verfahrens aus einem der Ansprüche 1 bis 4, wenn das Programm auf einem Computer läuft, angepaßt ist.

6. Computerprogramm nach Anspruch 5, das auf einem computerlesbaren Medium ausgebildet ist.

7. System zur automatisierten ABC-Analyse der Kostenstruktur eines Unternehmens, das
eine Speichereinheit zum Speichern einer Datenbank,
ein Mittel zum Eingeben von Daten in eine Datenbank, die in der Speichereinheit gespeichert ist, und die Datenbankfelder für die Daten und Verknüpfungsfelder zum Verknüpfen von Datenfeldern enthält,
eine Datenverarbeitungseinheit zum Verarbeiten von Daten, und
eine Anzeigeeinheit aufweist, wobei
die Datenverarbeitungseinheit angepaßt ist
zum Klassifizieren der Produkte in einer Rangliste mit absteigendem Umsatzteil der Produkte derart, daß die Produkte in (m+1) Klassen mit m Grenzen klassifiziert sind, wobei die Produkte, die über der n-ten Grenze (n = 1, 2, ... , m) liegen, die n-te Klasse (A, B) bilden, und die Produkte, die unter der m-ten Grenze liegen, die (m+1)-te Klasse bilden, und
zum Klassifizieren der Kunden in einer Rangliste mit absteigendem Umsatzteil der Kunden derart, daß die Kunden in (m+1) Klassen mit m Grenzen klassifiziert sind, wobei die Kunden, die über der n-ten Grenze (n = 1, 2, ... , m) liegen, die n-te Klasse (A, B) bilden, und die Kunden, die unter der m-ten Grenze liegen, die (m+1)-te Klasse bilden, und
die Anzeigeeinheit angepaßt ist zum Darstellen einer (m+1) x (m+1)-Matrix aus den (m+1) Klassen der Produkte und aus den (m+1) Klassen der Kunden derart, daß die einzelnen Matrixelemente jeweils einer Kombination einer Produktklasse mit einer Kundenklasse entsprechen und jedes Matrixelement zusammen mit einer Mehrzahl von zugehörigen Daten wie dem zugehörigen Umsatz, der zugehörigen Marge, der zugehörigen Zahl von Produkten/Kunden aus der entsprechenden Klasse und ähnlichem dargestellt werden.

8. System nach Anspruch 7, bei dem die Datenverarbeitungseinheit dazu angepaßt ist, daß die Daten über die indirekten Kosten nach den Regeln der Prozeßkostenrechnung mit den entsprechenden Produkten und/oder Kunden derart verknüpfbar sind, daß ein Betrag der indirekten Kosten jeder Kombination aus einem Produkt aus der Mehrzahl von Produkten und einem Kunden aus der Mehrzahl von Kunden zugeordnet wird, wobei der Betrag aus Anteilen der indirekten Kosten besteht, und diese Anteile über die Verknüpfung erfaßbar sind.

9. System nach Anspruch 8, bei dem die Datenverarbeitungseinheit und die Anzeigeeinheit dazu angepaßt sind, daß die Anteile des Betrages der indirekten Kosten, die einer Kombination aus einem Produkt und einem Kunden zugeordnet sind, durch Abfragen vorbestimmter Verknüpfungsdaten in den Verknüpfungsfeldern separat darstellbar sind, so daß eine Reduzierung bei den indirekten Kosten, die bei Streichung der entsprechenden Produkt-Kunde-Kombination entstehen würde, darstellbar ist.

10. System nach einem der Ansprüche 7 bis 9, bei dem
die Datenverarbeitungseinheit und die Anzeigeeinheit derart angepaßt sind, daß Listen ausgegeben werden können, wobei eine Liste eine vorbestimmte Auswahl aus der Mehrzahl von Produkt-Kunde-Kombinationen mit zugeordneten Datensätzen wie unterschiedlichen Deckungsbeiträgen, Kostenanteilen, etc. enthält.
